# FASCICULE DE BREVET EUROPEEN

(11) **EP 3 523 555 B1**
(45) Date de publication et mention de la délivrance du brevet: **24.04.2024**
(21) Numéro de dépôt: 17786985.6
(22) Date de dépôt: 06.10.2017
(51) Int. Cl.: F16H 37/06

(54) **MECANISME D'ENTRAINEMENT D'ORGANES DE REGLAGE DE L'ORIENTATION DES PALES ET TURBOMACHINE D'AERONEF COMPRENANT CE MECANISME**
MECHANISMUS FÜR ANTRIEBSSCHAUFELAUSRICHTUNGSANPASSUNGSKÖRPER UND FLUGZEUGTRIEBWERK MIT DIESEM MECHANISMUS
MECHANISM FOR DRIVING BLADE ORIENTATION ADJUSTMENT BODIES AND AIRCRAFT TURBINE ENGINE COMPRISING THIS MECHANISM

(30) Priorité: 07.10.2016 FR 1659703
(43) Date de publication de la demande: 14.08.2019
(73) Titulaire: Safran Aircraft Engines, 75015 Paris (FR)
(72) Inventeur: SEBRECHT, Pierre-Alain, Francis, Claude, 77550 Moissy-Crayamel (FR)
(74) Mandataire: Brevalex
(86) Numéro de dépôt international: PCT/FR2017/052742
(87) Numéro de publication internationale: WO 2018/065738

(56) Documents cités:
- EP-A1- 2 626 521
- EP-A2- 1 746 260
- EP-A2- 3 236 017
- FR-A1- 3 025 577

## Description

### DOMAINE TECHNIQUE

L'invention concerne un mécanisme d'entrainement d'organes de réglage de l'orientation des pales de plusieurs étages de redresseur d'une turbomachine.

L'invention concerne plus particulièrement un mécanisme d'entrainement de deux organes de réglage permettant d'entrainer simultanément les deux organes de réglage avec des vitesses de déplacement différentes d'un organe de réglage par rapport à l'autre.

### ÉTAT DE LA TECHNIQUE ANTÉRIEURE

Le compresseur et/ou la turbine d'une turbomachine sont constitués de plusieurs étages, chaque étage comportant un redresseur du flux de gaz.

Il est connu de modifier l'orientation des pales des redresseurs en fonction des conditions de fonctionnement de la turbomachine, pour optimiser le rendement de celle-ci.

Selon un mode de réalisation connu, la modification de l'orientation des pales de redresseur est commandée par l'intermédiaire d'un actionneur comportant un arbre de commande qui coopère avec un organe associé à chaque pale ou bien un boîtier de commande de l'orientation des pales.

Bien que l'utilisation d'un arbre unique pour l'entrainement des pales de deux étages de redresseur permette de limiter le nombre de composants dans la turbomachine, l'encombrement de ce système est particulièrement important, ce qui oblige de privilégier cette solution à des turbomachines de grandes dimensions.

L'utilisation d'un boîtier de commande est adaptable à toute taille de turbomachine. Cependant, cette solution comporte un grand nombre de composants, ce qui réduit la précision du système à cause du cumul des jeux entre les nombreux composants et leurs déformations respectives.

Il a aussi été proposé dans le document FR-3.025.577 un mécanisme d'entrainement comportant une roue dentée unique associée à deux organes de réglages et deux étages d'engrenages en prise avec la roue dentée dont chacun est associé à un organe de réglage.

Un tel mécanisme d'entrainement est relativement simple et d'encombrement limité.

Cependant, il est complexe à mettre en place puisque chacun des deux étages d'engrenages doit être positionné avec précision par rapport à la roue dentée et ce positionnement relatif peut être modifié du fait des dilatations différentes des composants du mécanisme d'entrainement, lors du fonctionnement de la turbomachine.

L'invention a pour but de proposer un mécanisme d'entrainement des moyens de réglage de l'orientation des pales qui soit à la fois d'encombrement réduit, et qui est de mise en place aisée et sûre.

### EXPOSÉ DE L'INVENTION

L'invention propose un mécanisme d'entrainement d'un premier organe de réglage de l'orientation des pales d'un premier étage de redresseur de turbomachine et d'un deuxième organe de réglage de l'orientation des pales d'un deuxième étage de redresseur de la turbomachine, conformément à la revendication 1.

L'utilisation d'une première roue dentée qui est accouplée, directement ou non avec chaque organe de réglage permet de limiter les difficultés de positionnement des composants les uns par rapport aux autres. De plus, ce mécanisme d'entrainement possède un nombre de composants limités, réduisant ainsi la masse du mécanisme d'entrainement.

De préférence, le rapport de transmission entre la première roue dentée et la roue dentée secondaire est variable en fonction de la position angulaire de la roue motrice dans la turbomachine.

De préférence, le mécanisme d'entrainement comporte des moyens d'accouplement de la première roue dentée avec la roue dentée secondaire pour faire varier le rapport de transmission.

De préférence, les moyens d'accouplement sont réalisés pour faire varier le rapport de transmission de manière non linéaire.

De préférence, les axes de rotation de la première roue dentée et de la roue dentée secondaire sont parallèles et décalés l'un par rapport à l'autre d'une distance inférieure à la somme des rayons des deux roues et l'une des deux roues comporte une rainure et l'autre roue comporte un doigt faisant saillie axialement par rapport à l'axe principal de la dite autre roue, le doigt étant reçu dans la rainure et étant apte à coopérer avec la rainure pour transmettre un couple depuis la premier roue dentée vers la roue dentée secondaire.

De préférence, la rainure est formée dans la première roue dentée et le doigt est porté par la roue dentée secondaire.

De préférence, la rainure est orientée principalement radialement par rapport à l'axe principal de la première roue dentée.

L'invention concerne aussi une turbomachine d'aéronef comportant deux étages de redresseur dont l'orientation des pales peut être modifiée, caractérisée en ce que chaque étage de redresseur comporte un organe de réglage de l'orientation des pales dudit étage de redresseur, les deux organes de réglage étant mobiles en rotation dans la turbomachine autour de l'axe principal de la turbomachine et étant entraînés en rotation par un mécanisme d'entraînement selon l'invention.

De préférence, chaque organe de réglage comporte une première portion dentée qui est accouplée avec la première roue dentée ou la roue dentée secondaire et une deuxième portion dentée qui engrène avec une roue dentée portée par chaque pale de l'étage de redresseur associé.

De préférence, la première portion dentée et la deuxième portion dentées sont situées sur une même extrémité d'un organe de réglage selon l'axe principal de la turbomachine et sont situées à deux côtes radiales différentes l'une de l'autre.

### BRÈVE DESCRIPTION DES DESSINS

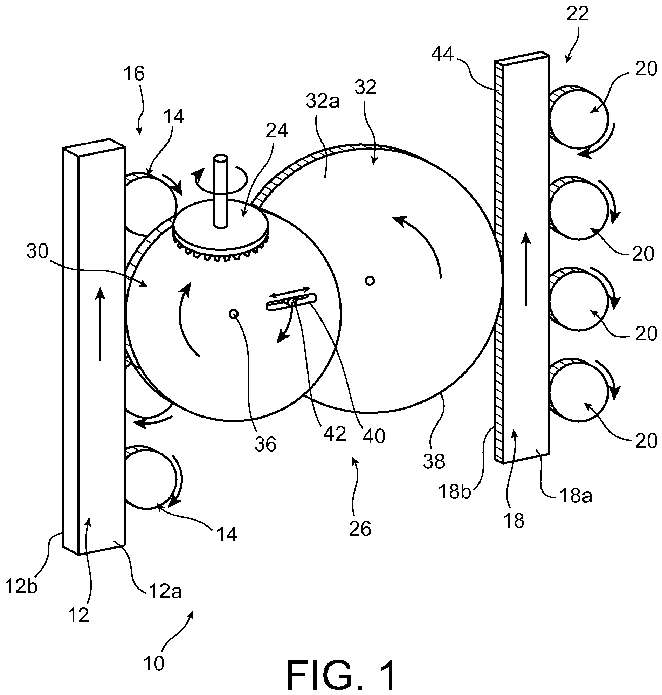

D'autres caractéristiques et avantages de l'invention apparaîtront à la lecture de la description détaillée qui suit pour la compréhension de laquelle on se reportera aux figures annexées parmi lesquelles la figure unique est une représentation schématique d'un mécanisme d'entrainement réalisé selon l'invention.

### EXPOSÉ DÉTAILLÉ DE MODES DE RÉALISATION PARTICULIERS

On a représenté à la figure unique un mécanisme 10 pour l'entrainement d'un organe de réglage 12 de l'orientation des pales 14 d'un premier étage 16 de redresseur de turbomachine et d'un organe de réglage 18 de l'orientation des pales 20 d'un deuxième étage 22 de redresseur de la turbomachine.

Chacun des deux organes de réglage 12, 18 de l'orientation des pales 14, 20 consiste en un anneau associé à chaque étage 16, 22 de redresseur, qui est mobile en rotation dans la turbomachine autour de l'axe principal de la turbomachine (non représenté). Une première extrémité axiale 12a, 18a de chaque organe de réglage 12, 18 comporte une portion dentée qui coopère avec une roue dentée portée par chaque pale 14, 20.

Ainsi, la rotation d'un organe de réglage 12, 18 dans la turbomachine provoque la rotation simultanée de toutes les pales 14, 20 de l'étage 16, 22 de redresseur qui lui sont associées.

Lors d'un changement des conditions de fonctionnement de la turbomachine, l'orientation des pales 14, 20 des deux étages 16, 22 de redresseur doit être modifiée simultanément pour optimiser les performances de la turbomachine. Aussi, les pales 14 du premier étage 16 de redresseur pivotent selon un angle différent de l'angle de pivotement des pales 20 du deuxième étage 22 de redresseur.

Le mécanisme 10 d'entrainement des 12, 18 est conçu pour entraîner simultanément les deux organes de réglage 12, 18 en mouvement et pour que l'amplitude de déplacement du premier organe de réglage 12, associé au premier étage 16 de redresseur soit différente de l'amplitude de déplacement du deuxième organe de réglage 18 qui est associé au deuxième étage 22 de redresseur.

Pour l'entrainement simultané des deux organes de réglage 12, 18, le mécanisme 10 d'entrainement comporte une roue motrice unique 24 qui entraine simultanément les deux organes de réglage 12, 18 ainsi qu'un ensemble d'engrenages 26 qui relie la roue motrice unique 24 aux deux organes de réglage 12, 18.

L'ensemble d'engrenages comporte une première roue dentée 30 qui est directement accouplée avec la roue motrice 24 et avec le premier organe de réglage 12.

La première roue dentée 30 est aussi accouplée au deuxième organe de réglage 18 par l'intermédiaire d'une roue dentée secondaire 32. Cette roue dentée secondaire 32 est accouplée directement au deuxième organe de réglage 18.

Ainsi, la première roue dentée 30 et la roue dentée secondaire 32 coopèrent l'une avec l'autre pour transmettre les efforts d'entrainement depuis la roue motrice 24 jusqu'au deuxième organe de réglage 12.

Une extrémité axiale 12a, 18b de chaque organe de réglage 12, 18 comporte à cet effet une portion dentée 44 qui coopère avec la première roue dentée 30 ou avec la roue dentée secondaire 32 qui lui est associée.

Ici, et de manière non limitative, les pales 14 du premier étage 16 de redresseur et la première roue dentée 30 coopèrent avec deux portions dentées du premier organe de réglage 12 qui sont situées sur la première extrémité axiale 12a du premier organe de réglage 12. Pour cela, chacune des portions dentées du premier organe de réglage 12 sont situées sur la première extrémité axiale 12a à des positions radiales différentes l'une de l'autre.

Il sera compris que l'invention n'est pas limitée à ce mode de réalisation et que les pales 14 du premier étage 16 de redresseur et la première roue dentée 30 peuvent coopérer avec deux portions dentées du premier organe de réglage 12 qui sont situées sur chacune de la première extrémité axiale 12a et de la deuxième extrémité axiale 12b du premier organe de réglage 12.

Les pales 20 du deuxième étage 22 de redresseur coopèrent avec une portion dentée du deuxième organe de réglage 18 qui est située sur la première extrémité axiale 18a du deuxième organe de réglage 18.

Du fait de la présence de la roue dentée secondaire 32 entre la première roue dentée 30 et le deuxième organe de réglage 18, le rapport de transmission entre la roue motrice 24 et le deuxième organe de réglage 18 est différent du rapport de transmission entre la roue motrice 24 et le premier organe de réglage 12.

Selon un autre aspect du mécanisme d'entrainement, la première roue dentée 30 et la roue dentée secondaire 32 sont accouplées l'une à l'autre pour fournir un rapport de transmission variable et qui varie en fonction de la position angulaire de la roue motrice 24, et donc de la première roue dentée 30.

La première roue dentée 30 et la roue dentée secondaire 32 sont disposées parallèlement l'une à l'autre et leur axes de rotation respectifs 36, 38 sont parallèles et sont décalés radialement l'un par rapport à l'autre. La distance entre les axes de rotation des deux roues dentées 30, 32 est ainsi inférieure à la somme des rayons des deux roues dentées 30, 32.

Les deux roues 32, 34 sont accouplées par des moyens d'accouplement permettant de faire varier le rapport de transmission.

Ces moyens d'accouplement consistent ici en un ensemble de rainure 40 et de doigt suiveur 42 dont chacun est respectivement porté par l'une ou l'autre de la première dentée 30 ou roue dentée secondaire 32.

Selon le mode de réalisation représenté à la figure unique, la rainure 40 est formée dans la première roue dentée 30 et elle est d'orientation principale radiale par rapport à l'axe 36 de rotation de la première roue dentée 30. Le doigt 42 est porté par la roue dentée secondaire 32, en faisant saillie axialement par rapport à une face radiale 32a de la roue dentée secondaire 32 faisant face à la première roue dentée 30.

Le doigt 42 est par conséquent fixé à la roue dentée secondaire 32 et il se déplace de manière solidaire à celle-ci.

Le doigt 42 est reçu dans la rainure 40 pour s'appuyer contre les parois internes de celle-ci.

Puisque les axes de rotation respectifs 36, 38 des deux roues 30, 32 sont décalés l'un par rapport à l'autre, lors de la rotation de la première roue dentée 30, le doigt 42 se déplace dans la rainure 40, modifiant alors la distance entre le doigt 42 et l'axe de rotation 36 de la première roue dentée 30. Le rapport de transmission en est alors modifié.

Il sera compris que l'invention n'est pas limitée à cette unique configuration de la rainure 40 et du doigt 42 et que la rainure 40 peut ne pas être rectiligne ni orientée radialement par rapport à l'axe 36 de rotation de la première roue dentée 30. La forme et l'orientation de la rainure 40 peuvent ainsi être définies afin d'obtenir une loi donnée définissant la valeur du rapport de transmission en fonction de la position angulaire de la roue motrice 24.

En outre, selon le mode de réalisation représenté, l'axe de rotation de la roue motrice 24 est globalement perpendiculaire aux axes de rotation 36, 38 des roues dentées 30, 32. Selon une variante de réalisation, les axes de rotation des différentes roues 24, 30, 32 sont parallèles.

La turbomachine (non représentée) comportant les étages de redresseur 16, 22 et le mécanisme d'entrainement 10 définis ci-dessus est alors de structure plus simple.

## Revendications

1. Mécanisme d'entrainement (10) d'un premier organe de réglage (12) de l'orientation des pales (14) d'un premier étage (16) de redresseur de turbomachine et d'un deuxième organe de réglage (18) de l'orientation des pales (20) d'un deuxième étage (22) de redresseur de la turbomachine,
comprenant un premier organe de réglage (12) et un deuxième organe de réglage (18), comprenant une roue motrice (24) unique qui entraine simultanément le premier organe de réglage (12) et le deuxième organe de réglage (18) et un ensemble d'engrenages qui est agencé entre la roue motrice (24) et les deux organes de réglage (12, 18),
dans lequel l'ensemble d'engrenages comporte une première roue dentée (30) qui est accouplée directement avec la roue motrice (24) et avec le premier organe de réglage,
**caractérisé en ce que** la première roue dentée est accouplée avec le deuxième organe de réglage par l'intermédiaire d'une roue dentée secondaire (32) qui est accouplée directement avec le deuxième organe de réglage et avec la première roue dentée.

2. Mécanisme d'entrainement (10) selon la revendication précédente, **caractérisé en ce que** le rapport de transmission entre la première roue dentée (30) et la roue dentée secondaire (32) est variable en fonction de la position angulaire de la roue motrice (24) dans la turbomachine.

3. Mécanisme d'entrainement (10) selon la revendication précédente, **caractérisé en ce qu'**il comporte des moyens d'accouplement (40, 42) de la première roue dentée (30) avec la roue dentée secondaire (32) pour faire varier le rapport de transmission.

4. Mécanisme d'entrainement (10) selon la revendication précédente, **caractérisé en ce que** les moyens d'accouplement sont réalisés pour faire varier le rapport de transmission de manière non linéaire.

5. Mécanisme d'entrainement (10) selon la revendication précédente, **caractérisé en ce que** les axes de rotation (36, 38) de la première roue dentée (30) et de la roue dentée secondaire (32) sont parallèles et décalés l'un par rapport à l'autre d'une distance inférieure à la somme des rayons des deux roues (30, 32) et l'une (30) des deux roues comporte une rainure (40) et l'autre roue (32) comporte un doigt (42) faisant saillie axialement par rapport à l'axe principal de la dite autre roue (32), le doigt (42) étant reçu dans la rainure (40) et étant apte à coopérer avec la rainure (40) pour transmettre un couple depuis la premier roue dentée (30) vers la roue dentée secondaire (32).

6. Mécanisme d'entrainement (10) selon la revendication précédente, **caractérisé en ce que** la rainure (40) est formée dans la première roue dentée (30) et le doigt (42) est porté par la roue dentée secondaire (32).

7. Mécanisme d'entrainement (10) selon la revendication précédente, **caractérisé en ce que** la rainure (40) est orientée principalement radialement par rapport à l'axe principal (36) de la première roue dentée (30).

8. Turbomachine d'aéronef comportant deux étages de redresseur (16, 22) dont l'orientation des pales (14, 20) peut être modifiée, **caractérisée en ce que** chaque étage de redresseur comporte un organe de réglage (12, 18) de l'orientation des pales (14, 20) dudit étage de redresseur (16, 22), les deux organes de réglage (12, 18) étant mobiles en rotation dans la turbomachine autour de l'axe principal de la turbomachine et étant entraînés en rotation par un mécanisme d'entraînement (10) selon l'une quelconque des revendications précédentes.

9. Turbomachine selon la revendication précédente, **caractérisée en ce que** chaque organe de réglage (12, 18) comporte une première portion dentée (44) qui est accouplée avec la première roue dentée (30) ou la roue dentée secondaire (32) et une deuxième portion dentée qui engrène avec une roue dentée portée par chaque pale (14, 20) de l'étage de redresseur (16, 22) associé.

10. Turbomachine selon la revendication précédente, **caractérisée en ce que** la première portion dentée et la deuxième portion dentées sont situées sur une même extrémité (12a) d'un organe de réglage (12) selon l'axe principal de la turbomachine et sont situées à deux côtes radiales différentes l'une de l'autre.

## Patentansprüche

1. Antriebsmechanismus (10) für ein erstes Einstellelement (12) für die Ausrichtung der Leitschaufeln (14) in einer ersten Stufe (16) eines Gleichrichters einer Turbomaschine und für ein zweites Einstellelement (18) für die Ausrichtung der Leitschaufeln (20) in einer zweiten Stufe (22) eines Gleichrichters der Turbomaschine,
umfassend ein erstes Einstellelement (12) und ein zweites Einstellelement (18), umfassend ein einziges Antriebsrad (24), das gleichzeitig das erste Einstellelement (12) und das zweite Einstellelement (18) antreibt, und eine Zahnradanordnung, die zwischen dem Antriebsrad (24) und den beiden Einstellelementen (12, 18) angeordnet ist,
wobei die Zahnradanordnung ein erstes Zahnrad (30) umfasst, das direkt mit dem Antriebsrad (24) und mit dem ersten Einstellelement gekoppelt ist,
**dadurch gekennzeichnet, dass** das erste Zahnrad über ein sekundäres Zahnrad (32), das direkt mit dem zweiten Einstellelement und dem ersten Zahnrad gekoppelt ist, mit dem zweiten Einstellelement gekoppelt ist.

2. Antriebsmechanismus (10) nach dem vorhergehenden Anspruch, **dadurch gekennzeichnet, dass** das Übersetzungsverhältnis zwischen dem ersten Zahnrad (30) und dem sekundären Zahnrad (32) in Abhängigkeit von der Winkelposition des Antriebsrads (24) in der Turbomaschine variabel ist.

3. Antriebsmechanismus (10) nach dem vorhergehenden Anspruch, **dadurch gekennzeichnet, dass** er Kopplungsmittel (40, 42) für das erste Zahnrad (30) mit dem sekundären Zahnrad (32) aufweist, um das Übersetzungsverhältnis zu variieren.

4. Antriebsmechanismus (10) nach dem vorhergehenden Anspruch, **dadurch gekennzeichnet, dass** die Kopplungsmittel dazu ausgebildet sind, das Übersetzungsverhältnis nichtlinear zu variieren.

5. Antriebsmechanismus (10) nach dem vorhergehenden Anspruch, **dadurch gekennzeichnet, dass** die Drehachsen (36, 38) des ersten Zahnrads (30) und des sekundären Zahnrads (32) parallel zueinander und um einen Abstand voneinander versetzt sind, der kleiner ist als die Summe der Radien der beiden Räder (30, 32), und das eine (30) der beiden Räder eine Nut (40) aufweist und das andere Rad (32) einen Zapfen (42) aufweist, der in Bezug auf die Hauptachse des anderen Rads (32) in axialer Richtung vorsteht, wobei der Zapfen (42) in der Nut (40) aufgenommen und dazu ausgelegt ist, mit der Nut (40) zusammenzuwirken, um ein Drehmoment vom ersten Zahnrad (30) in Richtung des sekundären Zahnrads (32) zu übertragen.

6. Antriebsmechanismus (10) nach dem vorhergehenden Anspruch, **dadurch gekennzeichnet, dass** die Nut (40) im ersten Zahnrad (30) ausgebildet ist und der Zapfen (42) vom sekundären Zahnrad (32) getragen wird.

7. Antriebsmechanismus (10) nach dem vorhergehenden Anspruch, **dadurch gekennzeichnet, dass** die Nut (40) in Bezug auf die Hauptachse (36) des ersten Zahnrads (30) hauptsächlich in radialer Richtung ausgerichtet ist.

8. Turbomaschine eines Flugzeugs, die zwei Gleichrichterstufen (16, 22) aufweist, deren Ausrichtung der Leitschaufeln (14, 20) geändert werden kann, **dadurch gekennzeichnet, dass** jede Gleichrichterstufe ein Einstellelement (12, 18) für die Ausrichtung der Leitschaufeln (14, 20) der Gleichrichterstufe (16, 22) aufweist, wobei die beiden Einstellelemente (12, 18) drehbeweglich in der Turbomaschine um die Hauptachse der Turbomaschine sind und durch einen Antriebsmechanismus (10) nach einem der vorhergehenden Ansprüche drehangetrieben werden.

9. Turbomaschine nach dem vorhergehenden Anspruch, **dadurch gekennzeichnet, dass** jedes Einstellelement (12, 18) einen ersten gezahnten Abschnitt (44), der mit dem ersten Zahnrad (30) oder dem sekundären Zahnrad (32) gekoppelt ist, und einen zweiten gezahnten Abschnitt aufweist, der mit einem Zahnrad in Eingriff steht, das von jeder Leitschaufel (14, 20) der zugeordneten Gleichrichterstufe (16, 22) getragen wird.

10. Turbomaschine nach dem vorhergehenden Anspruch, **dadurch gekennzeichnet, dass** sich der erste gezahnte Abschnitt und der zweite gezahnte Abschnitt am gleichen Ende (12a) eines Einstellelements (12) entlang der Hauptachse der Turbomaschine befinden und sich in zwei voneinander verschiedenen Radialabmessungen befinden.

## Claims

1. Drive mechanism (10) for a first adjustment device (12) for adjusting the orientation of the vanes (14) in a first stage (16) of a guide vanes assembly of a turbomachine and a second adjustment device (18) for adjusting the orientation of the vanes (20) in a second stage (22) of the guide vanes assembly of the turbomachine,
comprising a first adjustment device (12) and a second adjustment device (18),
comprising a single drive wheel (24) that simultaneously drives the first adjustment device (12) and the second adjustment device (18) and a set of gears that is arranged between the drive wheel (24) and the two adjustment devices (12, 18),
wherein the gearset comprises a first toothed wheel (30) that is directly coupled with the drive wheel (24) and with the first adjustment device,
**characterised in that** the first toothed wheel is coupled with the second adjustment device through a secondary toothed wheel (32) that is directly coupled with the second adjustment device and the first toothed wheel.

2. Drive mechanism (10) according to the preceding claim, **characterised in that** the transmission ratio between the first toothed wheel (30) and the secondary toothed wheel (30) is variable as a function of the angular position of the drive wheel (24) in the turbomachine.

3. Drive mechanism (10) according to the preceding claim, **characterised in that** it comprises means (40, 42) of coupling the first toothed wheel (30) with the secondary toothed wheel (32) to vary the transmission ratio.

4. Drive mechanism (10) according to the preceding claim, **characterised in that** the coupling means are made to vary the transmission ratio nonlinearly.

5. Drive mechanism (10) according to the preceding claim, **characterised in that** the rotation axes (36, 38) of the first toothed wheel (30) and of the secondary toothed wheel (32) are parallel to each other and offset from each other by a distance less than the sum of the radii of the two wheels (30, 32) and one (30) of the two wheels comprises a groove (40) and the other wheel (32) comprises a pin (42) that projects in the axial direction from the principal axis of said other wheel (32), the pin (42) fitting into the groove (40) and being capable of cooperating with the groove (40) to transmit a torque from the first toothed wheel (30) to the secondary toothed wheel (32).

6. Drive mechanism (10) according to the preceding claim, **characterised in that** the groove (40) is formed in the first toothed wheel (30) and the pin (42) is carried by the secondary toothed wheel (32).

7. Drive mechanism (10) according to the preceding claim, **characterised in that** the groove (40) is oriented principally in the radial direction from the principal axis (36) of the first toothed wheel (30).

8. Aircraft turbomachine comprising two guide vane assembly stages (16, 22) in which the orientation of the vanes (14, 20) can be modified, **characterised in that** each guide vane assembly stage comprises a device (12, 18) for adjustment of the orientation of the vanes (14, 20) in said guide vanes assembly stage (16, 22), the two adjustment devices (12, 18) being free to rotate inside the turbomachine around the principal axis of the turbomachine and being driven in rotation by a drive mechanism (10) according to any one of the preceding claims.

9. Turbomachine according to the preceding claim, **characterised in that** each adjustment device (12, 18) comprises a first toothed portion (44) that is coupled with the first toothed wheel (30) or the secondary toothed wheel (32) and a second toothed portion that engages with a toothed wheel supported by each vane (14, 20) of the associated guide vane assembly stage (16, 22).

10. Turbomachine according to the preceding claim, **characterised in that** the first toothed portion and the second toothed portion are located on the same end (12a) of an adjustment device (12) along the principal axis of the turbomachine and are located at two radial dimensions different from each other.
